# EUROPEAN PATENT APPLICATION

(11) **EP 1 203 605 A2**
(43) Date of publication of application: **08.05.2002**
(21) Application number: 01309256.4
(22) Date of filing: 31.10.2001
(51) Int. Cl.: A63F 13/12

(54) **Game scene making techniques**

(30) Priority: 01.11.2000 JP 2000335155; 27.06.2001 JP 2001195520
(71) Applicant: Sony Computer Entertainment Inc., Tokyo 107-0052 (JP)
(72) Inventor: Matsuura, Masaya, c/o NanaOn-Sha Co., Ltd, Meguro-ku, Tokyo 153-0063 (JP); Matsuura, Kiri, c/o NanaOn-Sha Co., Ltd, Meguro-ku, Tokyo 153-0063 (JP); Kojima, Hidehito, c/o Sony Computer Entertainment, Minato-ku, Tokyo 107-0052 (JP)
(74) Representative: Horner, David Richard

(57) **Abstract**

A game scene is made on the basis of data, for example sentence data obtained from, e.g., an e-mail or a predetermined text data, or audio data obtained from, e.g. a calling melody. A substantially infinite variety of stages can be provided thereby. Thus an enjoyable game that hardly wearies the player can be provided.

## Description

### BACKGROUND OF THE INVENTION

### 1. Field of the Invention

The present invention relates to information processing systems and methods which may be used to generate game scenes.

### 2. Description of the Related Art

Currently, video game machines which make it possible to play video games on the basis of game programs, e.g., stored in storage media such as CD-ROMs, DVD-ROMs, and semiconductor memories, have become popular.

A video game machine of this type reads out the game program stored in a storage medium such as a DVD-ROM or the like in response to an operation by a player through a controller and then displays a stage image and a character image in accordance with the read-out game program on a monitor, to thereby allow a player to enjoy the video game.

In such a conventional video game, however, the player can only play stages provided by the game manufacturer. Therefore, when playing the video game repeatedly, the player has to play a certain stage many times so that the player knows or can guess the next occurrence in the stage. For this reason, the player may lose interest in the video game gradually as he or she plays the game repeatedly, and finally the player may be tired of playing the game. This is a problem in conventional video games.

### SUMMARY OF THE INVENTION

Embodiments of the present invention provide game scene making methods, computer programs to be executed by a computer for the game scene making methods, storage media on which a computer program to be executed by a computer for the game scene making methods is recorded, terminal devices, and network game systems, all of which can always provide a novel stage to the player and thereby prevent the player's easy familiarity with and weariness of the game.

According to embodiments of the present invention, a game scene is made on the basis of sentence data obtained from, e.g., an e-mail or a predetermined text data, or audio data obtained from, e.g., a calling melody. A substantially infinite variety of stages can be provided thereby, so that the player can enjoy the game in many unknown stages and an enjoyable game that hardly wearies the player can be provided.

Embodiments of the present invention relate to game scene making methods for making game scenes on the basis of sentence data obtained from, e.g., an e-mail or a predetermined text data, or audio data obtained from, e.g., a calling melody, which is used for informing a portable telephone user or the like of a call arrival, and also to computer programs to be executed by a computer for the game scene making methods, storage media on which a computer program to be executed by a computer for the game scene making methods is recorded, terminal devices, and network game systems.

Particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a block diagram showing a portable telephone game system according to an embodiment of the present invention;
FIG. 2 is a block diagram showing functional components of a portable telephone used in the portable telephone game system according to the embodiment;
FIG. 3 is a flowchart showing a procedure for making a game scene based on an arrival mail in the portable telephone game system according to the embodiment;
FIG. 4 illustrates an example of a game scene made based on an arrival mail, with a game character;
FIG. 5 illustrates another example of a game scene made based on the arrival mail, with a game character;
FIG. 6 illustrates appearances of a character degrading in accordance with game conditions;
FIG. 7 illustrates an example of display for showing a player's score in the portable telephone game system;
FIG. 8 is a flowchart showing a procedure for making a game scene based on a calling melody in the portable telephone game system according to the embodiment;
FIG. 9 illustrates an example of data structure of a calling melody; and
FIG. 10 illustrates an example of game scene made based on the calling melody, with a game character.

### DETAILED DESCRIPTION OF THE PREFERRED EMBODIMENT

An embodiment of the present invention will be described with reference to the accompanying drawings. It is to be noted that the same or similar reference numerals are applied to the same or similar parts and elements throughout the drawings, and the description of the same or similar parts and elements will be omitted or simplified.

Embodiments of the present invention may be applicable to a portable telephone game system in which the user of a portable telephone can download a game program into the portable telephone from a certain provider and then enjoy the video game.

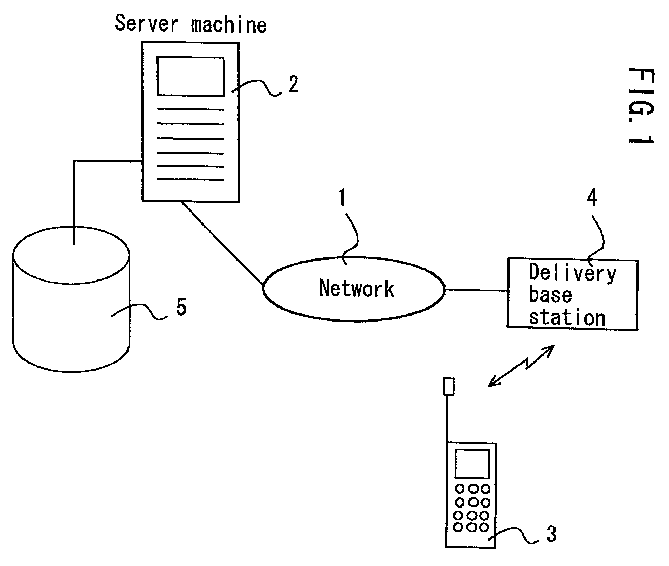

FIG. 1 schematically illustrates the whole construction of a portable telephone game system according to an embodiment of the present invention. Referring to FIG. 1, the system includes a network 1 such as Internet, a LAN, or a WAN; a server machine 2 of a provider for delivering a game program, an e-mail, a calling melody, and so on; a portable telephone 3 for executing a game on the basis of a game program downloaded from a database 5 of the server machine 2; and a delivery base station 4 for making a radio communication with the portable telephone 3, e.g., to transmit a game program or the like delivered from the server machine 2 through the network 1.

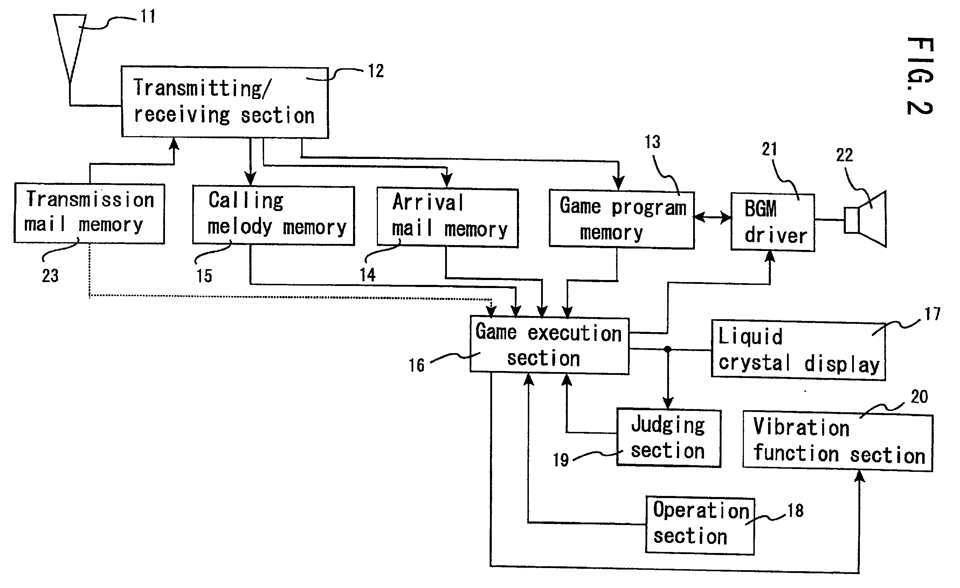

FIG. 2 illustrates functional components of the portable telephone 3, some of which are provided when a game program has been downloaded from the database 5 of the server machine 2 into the portable telephone 3.

Referring to FIG. 2, the portable telephone 3 includes an antenna 11 for, e.g., receiving a game program, an e-mail, or a calling melody delivered from the server machine 2 through the network 1 and the delivery base station 4; and a transmitting/receiving section 12 for taking, into the portable telephone 3, a game program or the like received through the antenna 11, and transmitting a game result or the like, which will be described later, to the delivery base station 4.

The portable telephone 3 further includes a game program memory 13 for storing therein a downloaded game program; an arrival mail memory 14 for storing therein an e-mail having arrived in the portable telephone 3; a calling melody memory 15 for storing therein a calling melody downloaded from the server machine 2, made by the user of the portable telephone 3, or received as a file annexed to an e-mail; and a game execution section 16 for executing a game on the basis of a game program stored in the game program memory 13 and an e-mail stored in the arrival mail memory 14.

The portable telephone 3 further includes a liquid crystal display 17 for display thereon a game character image and a game scene image made by the game execution section 16; an operation section 18 for operating the game character; a judging section 19 for judging as to whether or not the character being operated by the player has collided with an obstacle (the player has failed to operate well the character); a vibration function section 20 for vibrating the portable telephone 3 when the player has failed to operate well the character; a BGM driver 21 for providing a sound effect, a background music (BGM), or the like in the game; and a loudspeaker 22 for producing the sound provided by the BGM driver 21.

In this portable telephone game system, a game scene is made on the basis of an e-mail having received in the portable telephone 3.

In the below description, an e-mail is employed as an example of sentence data or text data for making a game scene. In embodiments of the present invention, however, it is of course envisaged that any piece of sentence data (or text data) other than such an e-mail can be used for making a game scene.

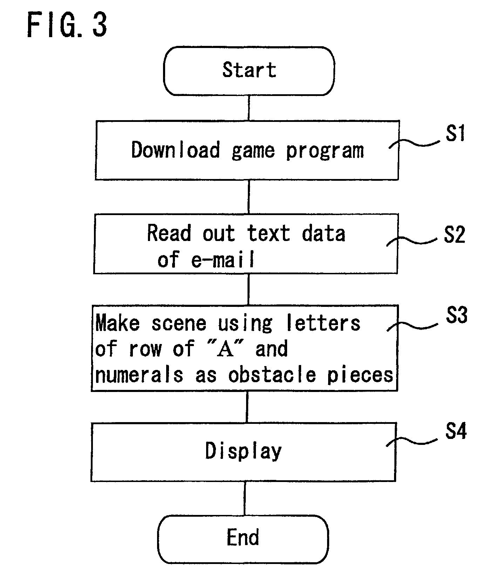

FIG. 3 illustrates a flowchart of a procedure for making a game scene on the basis of an e-mail. When the portable telephone 3 is powered on, the flow of FIG. 3 starts and advances to step S1.

In step S1, the player operates his or her portable telephone 3 to communicate with the server machine 2 illustrated in FIG. 1 and download a game program into the portable telephone 3 from the server machine 2. The downloaded game program is stored in the game program memory 13 through the antenna 11 and the transmitting/receiving section 12 illustrated in FIG. 2. The flow then advances to step S2.

In this example, the game program is downloaded from the server machine 2. In another example, however, the game program may have been provided beforehand in, e.g., a ROM in the portable telephone 3, or may be installed into the portable telephone 3 from a storage medium such as a CD-ROM or a semiconductor memory.

In step S2, the game execution section 16 illustrated in FIG. 2 reads out the game program from the game program memory 13. On the basis of the game program, the game execution section 16 controls the liquid crystal display 17 to display thereon a history of mail arrivals stored in the arrival mail memory 14, with a message urging the player to select an arrival mail to be used in the game, e.g., "Please select a mail to be used in game."

The player then operates the operation section 18 of the portable telephone 3 to select optionally an arrival mail to be used for making a game scene, from the arrival mail history displayed on the liquid crystal display 17.

In the next step S3, the game execution section 16 reads out, from the arrival mail memory 14, the mail selected by the player to make a game scene on the basis of the read-out mail. The flow then advances to step S4, in which the game execution section 16 controls the liquid crystal display 17 to display thereon the made game scene with a game character. After this, the game execution section 16 executes the game with controlling the display in response to each operation by the player through the operation section 18. When the game has ended, the flow of FIG. 3 ends.

The contents of the game will be described more specifically. Note that the below description is based on the Japanese kana syllabary. The game execution section 16 extracts, from the text data of the selected mail, numerals and letters belonging to the row of "*A*" of the Japanese kana syllabary, which row is constituted by letters "*A*", "*KA*", "*SA*", "*TA*", "*NA*", "*HA*", "*MA*", "*YA*", "*RA*", and "*WA*". The game execution section 16 then makes a game scene by arranging all sentences constituting the mail in a line so that the numerals and letters selected by extraction may serve as obstacles to the game character when the sentences displayed on the liquid crystal display 17 are moved laterally (or vertically) by scrolling.

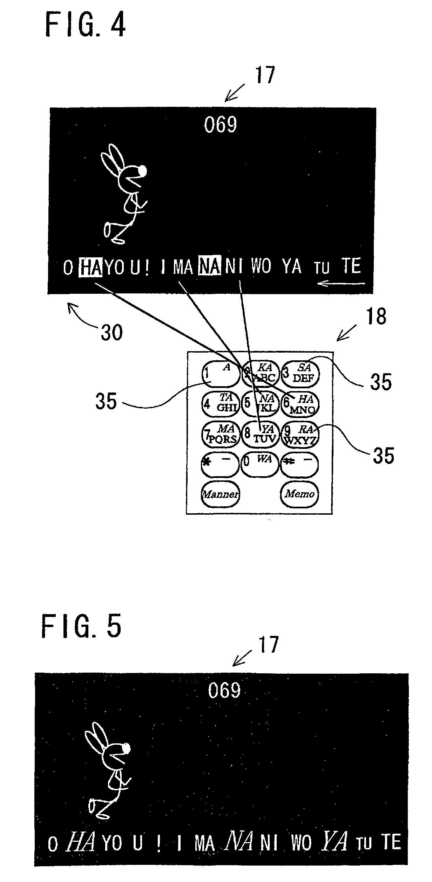

FIG. 4 illustrates an example of game scene made on the basis of an arrival mail, with a game character to be operated in the stage. In the example of FIG. 4, for the case that the mail selected by the player is constituted by sentences "*O-HA-YO-U! I-MA-NA-NI-WO-YA-TU-TE-I-RU-NO?"*, which mean "Good morning! What are you doing now?", the game execution section 16 extracts letters "*HA*", "*NA*", and "*YA*" belonging to the row of "A" from these sentences. In order that the player can easily consider these letters to be obstacles to the character 30, the game execution section 16 modifies each of these letters to be displayed, e.g., being enclosed with a square. Alternatively, as illustrated in FIG. 5, each of these letters may be displayed in an enlarged size relative to the other letters.

In addition to such a control for display, the game execution section 16 controls the BGM driver 21 to read out data of a background music (BGM) from the game program memory 13 and output it to the loudspeaker 22. The background music is thereby reproduced through the loudspeaker 22 of the portable telephone 3 while the above-described sentences of the arrival mail displayed on the liquid crystal display 17 are moved by scrolling.

When the game execution section 16 controls the liquid crystal display 17 to move the above-described sentences "*O-HA-YO-U! I-MA-NA-NI-WO-YA-TU-TE-I-RU-NO?*" of the arrival mail by scrolling, each letter constituting the sentences is moved, e.g., from the right to the left in the lower part of the screen as shown by an arrow in FIG. 4. If the player does not operate the character 30 in this state, the letters *"HA", "NA",* and "*YA*" in the sentences, which have been selected as obstacles, collide with the character 30.

In this portable telephone 3, as illustrated in FIG. 4, the above-described letters "*A*", "*KA*", "*SA*", "*TA*", "*NA*", "*HA*", "*MA*", "*YA*", "*RA*", and "*WA*" are allocated to the respective numeral keys "1" to "0" of 10-key 35 in the operation section 18. In this game, at a timing that a letter belonging to the row of "*A*" comes close to the character 30, when the player depresses the numeral key corresponding to the letter of 10-keys, the game execution section 16 displays the character 30 jumping upward in the display screen at the timing when the 10-key is depressed, so that the character 30 can jump over to avoid the scrolled obstacles.

In the illustrated example, when each of the letters "*HA*", "*NA*", and "*YA*" in the above-described sentences *"O-HA* *YO-U! I-MA-NA-NI-WO-YA-TU-TE-I-RU-NO?"*, which are moving leftward by scrolling, has come near to the character 30, the player depresses the numeral keys of 10-key 35 corresponding to the letters "*HA*", *"NA",* and "*YA*" in the operation section 18. The game execution section 16 controls the character 30 to jump upward at a timing when the numeral key is depressed. The character 30 then jumps over the letters as obstacles "*HA*", "*NA*", and "*YA*" to avoid the collision with the letters.

On the basis of a timing when the letter as an obstacle is moved by scrolling and a timing when the character 30 is operated to jump upward, the judging section 19 illustrated in FIG. 2 judges as to whether the obstacle has collided with the character 30 or not(collision judgment). The result of the judgment is supplied to the game execution section 16.

When receiving from the judging section 19 a judgment result indicating that the character 30 has successfully avoided the obstacle, the game execution section 16 adds predetermined points to the player's score and displays the resultant score on the liquid crystal display 17. In the example illustrated in FIG. 4 (or FIG. 5), it is shown that the player has currently obtained 69 points.

Contrastingly, when receiving from the judging section 19 a judgment result indicating that the character 30 has collided with the obstacle, the game execution section 16 drives the vibration function section 20 to give the vibration to the player operating the portable telephone 3. In addition, the game execution section 16 controls the BGM driver 21 to read out audio data of a sound effect upon collision from the game program memory 13 and output the sound effect to the loudspeaker 22. The collision sound is thereby reproduced through the loudspeaker 22. By the vibration of the portable telephone 3 and the collision sound reproduced through the loudspeaker 22, the player can intuitively know that the character 30 has collided with the obstacle. The player enjoys this game by operating the character 30 so as not to collide with such an obstacle.

In this portable telephone game system, the appearance of the character 30 is degraded when the character 30 collides with an obstacle. Inversely, the appearance of the character 30 is evolved when the character 30 has avoided a predetermined number of obstacles.

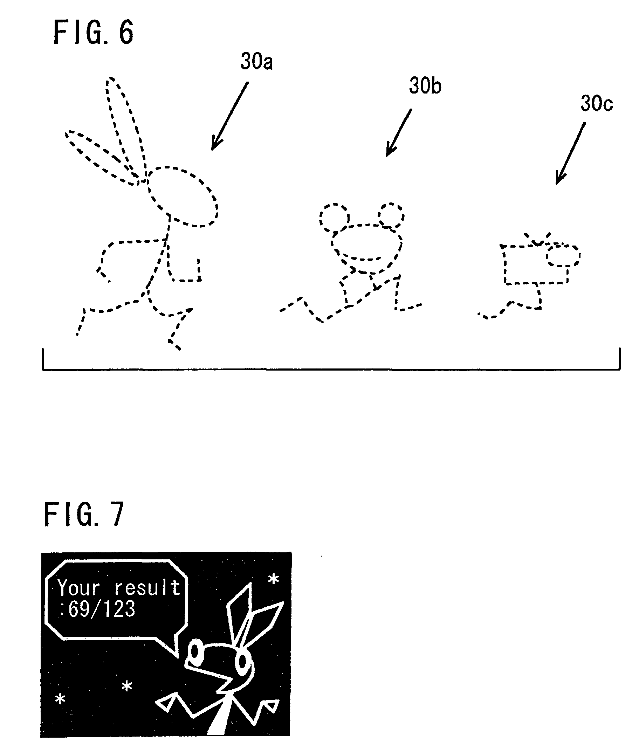

FIG. 6 illustrates an example of evolution/devolution of the character 30. As is clear in the example of FIG. 6, the game execution section 16 initially displays a character having an appearance of "rabbit" as the character 30, in which the appearance of the character 30 is degraded one step every time when information of judgment indicating that the character 30 collides with an obstacle or alternatively indicating that the character 30 has collided with a predetermined number of obstacles is supplied from a judging section 19.

More specifically in the illustrated example, in accordance with the number of collisions, the character 30 changes in appearance from the character 30a of "rabbit" to a character 30b of "frog" and in turn to a character of "worm".

Inversely, the appearance of the character 30 is evoluted one step every time when information of judgment indicating that the character 30 avoids an obstacle, or alternatively indicating that the character 30 has avoided a predetermined number of obstacles is supplied from the judging section 19.

More specifically in the present example, in accordance with the number of avoidances, the character 30 changes in appearance from the character 30c of "worm" to the character 30b of "frog" and in turn to the character 30a of "rabbit".

Since the appearance of the character 30 changes in accordance with collision judgment, the game also entertaining visually can be provided.

This game ends when the character 30 has collided with a predetermined number of obstacles or when the character 30 has avoided the last obstacle with less than a predetermined number of collisions. When the game ends, the game execution section 16 displays the player's score corresponding to the number of obstacles that the character 30 has avoided, with a perfect score that is obtained when the character 30 has avoided all obstacles in the arrival mail used for making the stage.

More specifically, when extracting numerals and letters belonging to the row of "*A*" from an arrival mail selected by the player to form obstacles, the game execution section 16 memorizes the perfect score of the stage corresponding to the number of extracted numerals and letters. When the game ends, the game execution section 16 displays the player's score in the form of a fraction whose numerator indicates the player's score and denominator indicates the perfect score.

FIG. 7 illustrates an example of display for showing the player's score. In the example of FIG. 7, the game execution section 16 displays, on the liquid crystal display 17, the character 30 with its balloon, in which the player's score is displayed as, e.g., "Your score: 69/123". In this example, "69" indicates the player's score corresponding to the number of obstacles that the player cleared, and "123" indicates the perfect score that will be obtained when the player has cleared all obstacles in the arrival mail used for making the stage.

Thus, the player's score is shown together with the perfect score of the stage, to thereby enable the player to know the difficulty of the stage made from the arrival mail. Besides, by comparing the player's score with the perfect score, the player can recognize the degree of conquest of the stage and his or her current skillfulness.

Next, for the case that obstacles appear at short intervals, e.g., three letters "*A*" appear in succession, the successive operations corresponding to these obstacles are required for avoiding the obstacles. Thus a game scene including successive obstacles is highly difficult. To clear such a stage, considerable skillfulness is required in the game and the operation of the operation section 18. In this portable telephone game system, therefore, the degree of difficulty of the game scene made from an arrival mail can be adjusted to a desired degree by the player.

More specifically, when the player selects an arrival mail for making a game scene, the game execution section 16 controls the liquid crystal display 17 to display thereon a selection image for urging the player to select a degree of difficulty of the stage, e.g., out of "easy", "normal", and "hard". The player then operates the operation section 18 to select a desired degree of difficulty.

When the game execution section 16 makes a game scene on the basis of the arrival mail selected by the player and the player has selected "easy", the game execution section 16 detects a part of the stage where obstacles appear in succession, and then the game execution section 16 thins out the obstacles so that no successive obstacles appear.

For example, if the stage includes a part where three letters "*A*" appear in succession, the game execution section 16 cancels two of them and leaves only one letter "*A*". Since the three successive obstacles are thereby thinned out into one obstacle, the degree of difficulty of the stage is set at "easy".

Similarly, if the player has selected "normal", the game execution section 16 detects a part of the stage where obstacles appear in succession, and then the game execution section 16 thins out the obstacles so that successive obstacles appear at appropriate intervals.

For example, if the stage includes a part where three letters "*A*" appear in succession, the game execution section 16 cancels one of them and leaves two letters "*A*". Since the three successive obstacles are thereby thinned out into two obstacles, the degree of difficulty of the stage is set at "normal".

In this game, as described above, each letter in the arrival mail selected by the player and displayed on the liquid crystal display 17 is moved laterally (or vertically) by scrolling. In this portable telephone game system, the degree of difficulty of the stage can be adjusted also by controlling the scrolling speed.

More specifically, when the player selects an arrival mail for making a game scene, the game execution section 16 controls the liquid crystal display 17 to display thereon a selection image for urging the player to select a scrolling speed of the stage, e.g., out of "fast", "normal", and "slow". The player then operates the operation section 18 to select a desired degree of difficulty.

The game execution section 16 moves each letter in the arrival mail at the scrolling speed selected by the player. The faster the scrolling speed is, the shorter the time is for determining to jump the character 30 so that the higher the degree of difficulty of the stage is. Conversely, the slower the scrolling speed is, the longer the time is for determining to jump the character 30 so that the lower the degree of difficulty of the stage is.

Besides, the game execution section 16 controls the BGM driver 21 to reproduce a background music at a tempo matching the selected scrolling speed. That is, the background music is reproduced at a fast tempo when "fast" is selected for the scrolling speed, while the background music is reproduced at a slow tempo when "slow" is selected for the scrolling speed. Thus a background music at a tempo matching the selected scrolling speed can be reproduced, to thereby allow a player to enjoy the game aurally.

Next, in the above game constitution, utilizing the feature that the letters "*A*", "*KA*", "*SA*", "*TA*", "*NA*", *"HA",* "*MA*", "*YA*", "*RA*", and "*WA*" constituting the row of "*A*" of the Japanese *kana* syllabary are allocated to the respective numeral keys "1" to "0" of the 10-key 35 of the portable telephone 3, a game scene is made by using some letters of the row of "*A*" as obstacle pieces. In another example, however, other Japanese *kana* letters as well as the above letters can also be used as obstacle pieces.

For example, to the numeral key "2" of the 10-key 35 of the portable telephone 3, letters "*KI*", "*KU*", "*KE*", and *"KO"* as well as letter "*KA*" are allocated. These letters "*KA*", "*KI*", "*KU*", "*KE*", and "*KO*" constitute the column of "*KA*" of the Japanese *kana* syllabary. Also, to the numeral key "7" of the 10-key 35, letters "*MI*", "*MU*", *"ME",* and "*MO*" as well as letter "*MA*" are allocated. These letters "*MA*", "*MI*", "*MU*", *"ME",* and "*MO*" constitute the column of "*MA*" of the Japanese *kana* syllabary.

In this way, for the case that any letter of the Japanese *kana* syllabary is allocated to the numeral key of the 10-key 35 corresponding to the column including the letter, the user of the portable telephone 3 can select any letter by depressing the corresponding numeral key the corresponding times. For example, if the user intends to select letter "*MU*", he or she depresses the numeral key "7" of the 10-key 35 three times to display the letter "*MU*". Also, if the user intends to select letter "*KE*", he or she depresses the numeral key "2" of the 10-key 35 four times to display the letter *"KE".*

Using this feature of the portable telephone 3, any Japanese *kana* letter can be used for making a game scene and thereby a game scone with higher difficulty can be provided.

This will be described more specifically using the above-described sentences "*O-HA-YO-U! I-MA-NA-NI-WO-YA-TU-TE-I-RU-NO?"* by way of example. In case of using only letters of the row of "*A*" as obstacle pieces, letters "*HA*", "*NA*", and "*YA*" are extracted from the sentences as obstacle pieces. In the present case, however, any letter in the sentences can be used as an obstacle piece.

For this reason, the game execution section 16 extracts appropriate letters from the sentences in accordance with the degree of difficulty selected by the player. The extracted letters are used as obstacle pieces and moved by scrolling. The player enjoys the game by operating the character 30 to jump over each of these letters while the sentences are moved by scrolling.

Assume now that letters "*NI*" and "*TE*" in the above sentences are used as obstacle pieces. In this case, at a timing when letter "*NI*" has come near to the character 30, the player depresses the numeral key "5" of the 10-key 35 two times, to which key "5" letters "*NA*", "*NI*", "*NU*", *"NE",* and "*NO*" are allocated. The character 30 thereby jumps so as to avoid the letter "*NI*" at the timing when the numeral key "5" has been depressed two times. Also, at a timing when letter *"TE"* has come near to the character 30, the player depresses the numeral key "4" of the 10-key 35 four times, to which key "4" letters "*TA*", "*TI*", "*TU*", "*TE*", and "*TO*" are allocated. The character 30 thereby jumps so as to avoid the letter *"TE"* at the timing when the numeral key "4" has been depressed four times.

In this way, by using any desired letter of the Japanese *kana* syllabary as an obstacle piece, the entertaining game with higher difficulty can be provided.

In such a game design using any letter of the Japanese kana syllabary, the game execution section 16 may give the player predetermined points even if the player has operated the correct key but not the correct times. For example, when letter "*TE*" is used as an obstacle piece, to surely avoid the obstacle, the player must depress the numeral key "4" four times as described above. However, even when the player depressed the numeral key "4" one, two, three, or five times, the game execution section 16 gives the player predetermined points since the correct key was depressed. Points given in this case are less than the points to be given when the player depressed the key four times correctly.

Also, when letter "*NI*" is used as an obstacle piece, to surely avoid the obstacle, the player must depress the numeral key "5" two times as described above. However, even when the player depressed the numeral key "5" one, three, four, or five times, the game execution section 16 gives the player predetermined points since the correct key was depressed. Points given in this case are also less than the points to be given when the player depressed the key two times correctly.

By this, the game can have a variety of score and becomes more entertaining.

In the above description, Japanese sentences were used by way of example. The portable telephone game system of this embodiment, however, can cope with any language such as English other than Japanese. For example, the above-described Japanese sentences "*O-HA-YO-U! I-MA-NA-NI-WO-YA-TU-TE-I-RU-NO?"* can be translated into English as "Good morning! What are you doing now?" In the portable telephone 3 used in an English area, for the case that it is assumed that alphabet letters "A", "D", "G", "J", "M", "P", "S", "V", and "Y" may be allocated to the respective numeral keys "1" to "9" of the 10-key 35 (in general, no alphabet letter is allocated to the numeral key "0", the game execution section 16 employs these alphabet letters "A", "D", "G", "J", "M", "P", "S", "V", and "Y" as obstacle pieces.

In the present example, the game execution section 16 extracts letters "G" and "d" from word "Good" in "Good morning! What are you doing now?" to be used as obstacle pieces. Also, "m" and "g" are extracted from "morning"; "a" from "What"; "a" from "are"; "y" from "you"; and "d" and "g" from "doing" to be used as obstacle pieces. The game execution section 16 makes a game scene using these extracted alphabet letters as obstacle pieces, and the player can enjoy the game as well as the case of Japanese as described above.

In the above-described example, the game execution section 16 makes a game scene on the basis of an arrival mail. In another example, however, the execution section 16 makes a game scene on the basis of a mail transmitted or to be transmitted.

In this case, as shown by a broken line in FIG. 2, the game execution section 16 reads out an e-mail selected by the player from a transmission mail memory 23 in which mails transmitted or to be transmitted (draft) are stored. The game execution section 16 makes a game scene on the basis of the read-out mail. The player can enjoy the game as well as the above-described example.

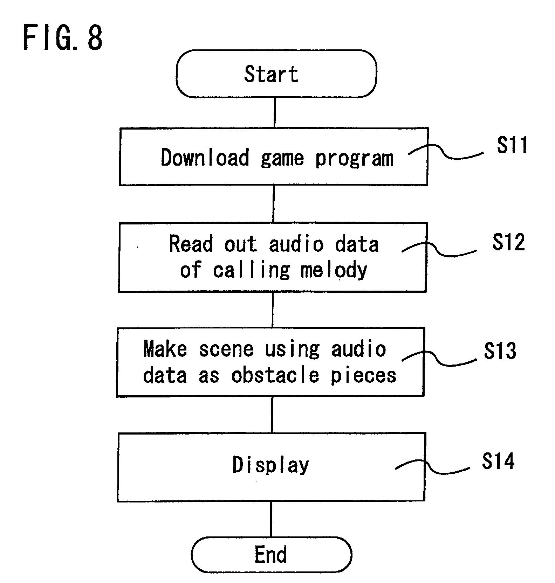

Next, in this portable telephone game system, a game scene can be made also on the basis of a calling melody delivered to the portable telephone 3 or made by the user of the portable telephone 3. FIG. 8 illustrates a flowchart of a procedure for making a game scene on the basis of a calling melody. When the portable telephone 3 is powered on, the flow of FIG. 8 starts and advances to step S11.

In step S11, the player operates his or her portable telephone 3 to communicate with the server machine 2 illustrated in FIG. 1 and download a game program into the portable telephone 3 from the server machine 2. The downloaded game program is stored in the game program memory 13 through the antenna 11 and the transmitting/receiving section 12 illustrated in FIG. 2. The flow then advances to step S12.

In step S12, the game execution section 16 illustrated in FIG. 2 reads out the game program from the game program memory 13. On the basis of the game program, the game execution section 16 controls the liquid crystal display 17 to display thereon a list of the titles of arrival melodies stored in the calling melody memory 15, with a message urging the player to select a calling melody to be used for the game, e.g., "Please select a melody to be used for game."

The player then operates the operation section 18 of the portable telephone 3 to select optionally a calling melody to be used for making a game scene, from the list of the arrival melodies displayed on the liquid crystal display 17.

In the next step S13, the game execution section 16 reads out, from the calling melody memory 15, data of the calling melody selected by the player. On the basis of the data of the calling melody, the game execution section 16 makes a game scene. The flow then advances to step S14, in which the game execution section 16 controls the liquid crystal display 17 to display thereon the made game scene with a game character. After this, the game execution section 16 executes the game with controlling the display in response to each operation by the player through the operation section 18. When the game has ended, the flow of FIG. 8 ends.

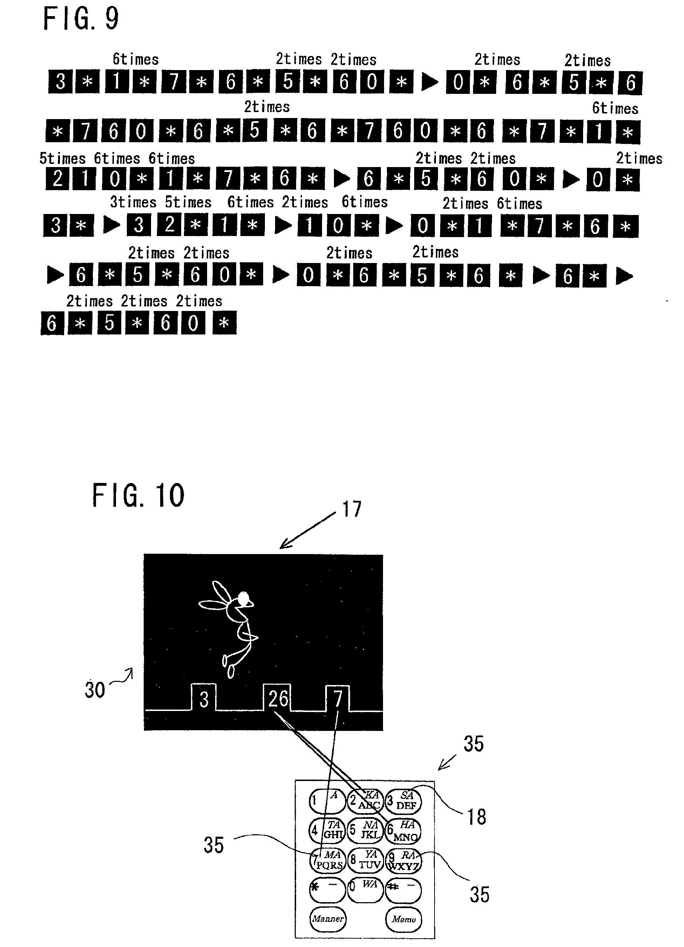

More specifically, each calling melody is stored in the calling melody memory 15 as numerical data for indicating scales, intervals, and so on, e.g., as illustrated in FIG. 9. Therefore, the game execution section 16 uses each numeral of the numerical data constituting the calling melody as an obstacle to make a game scene. The game execution section 16 arranges the numerals in a line and moves them laterally (or vertically) on the liquid crystal display 17 by scrolling.

FIG. 10 illustrates an example of game scene made on the basis of a calling melody, with a game character to be operated in the stage. As is clear in the example of FIG. 10, for the case that the data of the calling melody selected by the player is constituted by numerals, e.g., "3", "26", "7", the game execution section 16 makes an obstacle in the form of an protrusion by using each of the numerals "3", "26", "7", ..., and moves it by scrolling.

For example, at a timing when obstacle "3" has come near to the character 30, the player depresses the numeral key "3" of the 10-key 35 in the operation section 18 of the portable telephone 3. The character 30 thereby jumps so as to avoid the obstacle "3" at the timing when the numeral key "3" is depressed.

Similarly, at a timing when obstacle "26" has come near to the character 30, the player depresses the numeral keys "2" and "6" at once. The character 30 thereby jumps so as to avoid the obstacle "26" at the timing when the numeral key "6" of the 10-key 35 is depressed after the numeral key "2" of the 10-key 35 "6" is depressed.

In this case in which a game scene is made on the basis of a calling melody, the appearance of the character 30 changes in accordance with game conditions, such as the above-described case in which a game scene is made on the basis of an e-mail (see FIG. 6). Besides, the player's score is displayed together with the perfect score of the stage, such as the above-described case (see FIG. 7). Further, numeral obstacles are thinned out in accordance with the degree of difficulty selected by the player, and the scrolling speed for obstacles is adjusted to control the degree of difficulty, such as the above-described case.

In another game design of this case, when obstacle "26" has come near to the character 30, the player may depress the numeral keys "2" and "6" in this order.

In this portable telephone game system, the user of any portable telephone 3 can not only solely play the game but also compete with other players in the game.

When the user of a portable telephone 3 wants to compete with other players, he or she accesses the server machine 2 to download a game program and receive an e-mail, a predetermined text data, or a calling melody. After playing the game, the player transmits the game result with his or her own name (it may be his or her handle (nickname) or the like) to the server machine 2.

When receiving the game result from the player, the server machine 2 inquires of the player whether his or her rank is to be registered or not. If the player requests the registration of his or her rank, the server machine 2 registers the player's game result with his or her name at the position corresponding to the game result in a database.

In the database, a ranking list is thus made in which game results with the players' names are ranked in the order from the best to the worst. Any player can freely access the ranking list. The player can enjoy the game to obtain a better result than that of another player.

The sever machine 2 may present a predetermined item (in most cases, digital contents) to a player in accordance with his or her game result.

More specifically, to a player whose game result was better than a predetermined game result, the server machine 2 presents, e.g., a program for making his or her character 30 dance at the time when the player has cleared a game scene. Besides, the server machine 2 may give the player, e.g., a special calling melody, image data of a standby image, his or her fortune told, a special character (so-called hidden character), or audio data of an interlude or background sound such as hand clapping, cheers, or a shout. Such audio data of the interlude or the like may be assigned to a predetermined (or arbitrary) key of the 10-key 35. When the key is depressed, the tone of hand clapping, cheers, a voice of the character, or the like is reproduced.

The server machine 2 includes therein a bulletin board system (BBS) to which any player can have access and freely write a message or opinion. Through the bulletin board system, a player can exchange information with another player.

In another game design, the server machine 2 can provide and transmit to each player a sentence as a part of a series of sentences, or provide a part of a calling melody. When the player clears the game scene made based on the received sentence or the like, the player then transmits the game result to the server machine 2. When the server machine 2 judges that the player has cleared the game scene made based on the transmitted sentence or the like, the server machine 2 then provides and transmits to the player the subsequent sentence in the series, or the subsequent part of the calling melody.

In this case, to read all sentences in the series or hear the entire calling melody, the player must clear all stages of the game. This makes the player eager in the game so that the game becomes more entertaining.

As described above, in the portable telephone game system of this embodiment, a game scene can be made on the basis of sentence data obtained from, e.g., an e-mail, or audio data obtained from, e.g., a calling melody. It is, therefore, possible to provide always a novel game scene to the player. Thus, even when the player plays the game repeatedly, he or she never knows or hardly can guess the next occurrence in the stage being played. This can prevent the player's easy familiarity with and weariness of the game to thereby allow the player to keep his or her interest in the game for a long time.

In the above-described embodiment, a game system for portable telephones is described. Embodiments of the present invention are, however, applicable to other implementations, for example game machines or computer systems in which such a game program as described above is read out from a storage medium such as a CD-ROM, a DVD-ROM, or a semiconductor memory, and a game image is displayed on a monitor device.

Also in this case, when such a game machine or computer system is connected with the server machine 2 through the network 1, it is possible to transmit a game result and download an item. Thus the same effect as that described above can be obtained.

Besides, in the above-described embodiment, a game scene is made on the basis of an e-mail or calling melody stored in a memory (the arrival mail memory 14, the arrival memory 15, or the transmission mail memory 23) provided in the portable telephone 3. In a modification of the embodiment, however, such an e-mail or calling melody may be read out from a semiconductor memory connected to an external memory terminal provided in the portable telephone 3 so as to be made the game scene.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information processing method comprising the steps of:
selecting a predetermined letter from a plurality of letters;
displaying an object formed by adding visual effect on the selected letter;
displaying a predetermined object which is moved in accordance with a user's instruction;
comparing display positions between the predetermined object and the object to which the visual effect is added.

2. The method according to claim 1, wherein the plurality of letters is formed from a text data.

3. The method according to claim 1 or 2, further comprising the step of:
arranging the object to which the visual effect is added in a line, and displaying the object with being moved by scrolling.

4. The method according to Claim 1 or 3, wherein the plurality of letters is formed from an audio data.

5. The method according to claim 4, wherein the audio data is a musical sound.

6. A storage medium having recorded therein an information processing program to be executed on a computer, wherein the information processing program comprising the steps of:
selecting a predetermined letter from a plurality of letters;
arranging the object formed by adding visual effect on the selected letter in a line, and displaying the object with being moved by scrolling;
displaying an predetermined object which is moved in accordance with a user's instruction; and
comparing display positions between the predetermined object and the object to which the visual effect is added.

7. A terminal device comprising:
storing means for storing an information processing program;
selecting means for selecting a predetermined letter from a plurality of letters and forming an object by adding visual effect on the selected letter, or making letters corresponding to audio data and forming an object by adding the visual effect on the letters, according to the information processing program;
first display-control means for displaying the object to which the visual effect is added on displaying means with being moved by scrolling;
second display-control means for displaying a predetermined object which is moved in accordance with operation by operating means on the displaying means; and
comparing means for comparing display positions between the predetermined object and the object to which the visual effect is added.

8. The terminal device according to Claim 7, further comprising;
communication means for downloading the information processing program from a predetermined server machine into the storing means.

9. The terminal device according to Claim 7 or 8, further comprising;
game difficulty setting means for setting a degree of game difficulty, and
wherein the object forming means reduces the number of the selected letters from the plurality of letters in response to the set degree to form the object to which the visual effect is added.

10. The terminal device according to claim 7, 8 or 9, wherein the second display-control means changes an appearance of the predetermined object in accordance with comparison result of the comparing means.

11. The terminal device according to claim 7, 8, 9 or 10, further comprising:
third display-control means for displaying the comparison result of the comparing means on the display means.

12. A terminal device comprising:
storing unit for storing an information processing program;
selecting unit for selecting a predetermined letter from a plurality of letters and forming an object by adding visual effect on the selected letter, or making letters corresponding to audio data and forming an object by adding the visual effect on the letters, according to the information processing program;
first display-control unit for displaying the object to which the visual effect is added on displaying unit with being moved by scrolling;
second display-control unit for displaying a predetermined object which is moved in accordance with operation by operating unit on the displaying unit; and
comparing unit for comparing display positions between the predetermined object and the object to which the visual effect is added.

13. A network game system comprising:
a terminal device which comprises: selecting means for selecting a predetermined letter from a plurality of letters or forming means for forming letters corresponding to audio data; object forming means for forming an object by adding visual effect on the letter; first display-control means for arranging the object to which the visual effect is added in a line, and displaying the object on display means with being moved by scrolling; second display-control means for display a predetermined object which is moved in accordance with a user's instruction; comparing means for comparing display position between the predetermined object and the object to which the visual effect is added; and transmitting means for transmitting the comparison result via a predetermined network, and
the server machine which is connected to the predetermined network and transmits to the terminal device at least one of an aggregation result of scores after the aggregation of the comparison result received from the terminal device or the predetermined contents in accordance with the comparison result received from the terminal device.

14. An information processing program to be executed on a computer, wherein the information processing program comprises the steps of:
selecting a predetermined letter from a plurality of letters;
arranging the object formed by adding visual effect on the selected letter in a line, and displaying the object with being moved by scrolling;
displaying an predetermined object which is moved in accordance with a user's instruction; and
comparing display positions between the predetermined object and the object to which the visual effect is added.
